Europäisches Patentamt

European Patent Office

Office européen des brevets

(11) Publication number: **0 233 082**
**A2**

# (12) EUROPEAN PATENT APPLICATION

(21) Application number: **87301190.2**

(22) Date of filing: **11.02.87**

(51) Int. Cl.⁴: **A 01 B 1/02**
**B 25 G 1/10**

(30) Priority: **11.02.86 GB 8603294**

(43) Date of publication of application:
**19.08.87 Bulletin 87/34**

(84) Designated Contracting States: **DE FR GB IT NL**

(71) Applicant: **Fabien, Lionel Ralph**
**Chestnut House Tidmarsh**
**Reading Berkshire RG8 8EB (GB)**

(72) Inventor: **Fabien, Lionel Ralph**
**Chestnut House Tidmarsh**
**Reading Berkshire RG8 8EB (GB)**

(74) Representative: **Crisp, David Norman et al**
**D. YOUNG & CO. 10 Staple Inn**
**London, WC1V 7RD (GB)**

(54) **Tool Handles.**

(57) A wooden tool handle shaft having at least one longitudinal glass reinforcing plastics or fibreglass strengthening spine (4).

FIGURE 1

EP 0 233 082 A2

**Description**

Tool Handles

This invention relates to tool handles and shafts therefor, more particularly to improved handles for shovels, spades, forks and the like.

Traditionally handle shafts for tools such as shovels, spades, forks and the like have been made from wood. While being inexpensive, such wood handle shafts are not particularly strong nor long lasting since they are prone to splitting and can be easily damaged.

In order to overcome these disadvantages, tool handle shafts are available which are made from solid fibreglass or glass reinforced plastics. These handles are extremely strong and tough but at the same time they are heavy and relatively expensive. In addition a costly machining operation is required to produce a tapered end to the shaft for engagement with the blade or forging of the tool.

It has been proposed to strengthen tool handles with metal spines. However, these handles again tend to be heavy and suffer from the further disadvantage that the metal may be subject to corrosion, especially when working in a corrosive environment. Furthermore, the use of tools with metal spines may be dangerous when working near electrical apparatus.

I have now found a method for improving the strength and working life of wooden tool handle shafts whilst avoiding the above disadvantages.

Thus, the invention provides a wooden tool handle shaft having at least one longitudinal glass reinforced plastics or fibreglass strengthening spine.

The invention also provides tools comprising a wooden handle shaft having at least one longitudinal glass reinforced plastics or fibreglass strengthening spine.

The spines are conveniently formed by inserting one or more rods or bars of fibreglass material into corresponding grooves or holes formed in the longitudinal axis of the shaft.

Preferably, a single spine is present, formed by inserting a fibreglass rod into a hole bored along the length of the wooden shaft. The rod may be advantageously glued in place e.g. using a conventional epoxy resin.

The tool handle will generally be provided with a hilt portion which may, for example, be of thermoplastics such as polypropylene. If desired, the hilt may be directly moulded onto the handle shaft. In this case, the fibreglass rod may be conveniently inserted into a slightly oversize hole in the wooden shaft prior to moulding the hilt thereon. In moulding the hilt portion, the thermoplastic material may enter the space between the wooden shaft and the fibreglass rod thereby bonding the latter in place.

The strengthening spine generally extends along the axis of the wooden shaft between the hilt portion and at least a part of the handle in the socket of the blade or forging of the tool. For example, a 35 cm (14 inch) rod may be inserted into a hole in a standard 43 cm (17 inch) wooden handle shaft for a spade. In this case the hole in the shaft is preferably a blind hole with the blind end at the blade end of the handle.

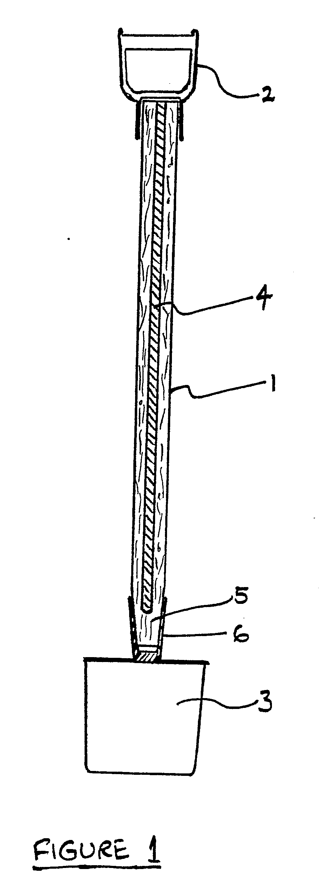

An embodiment of the invention is hereinafter described by way of example with reference to the Figure of the accompanying drawing which diagrammatically shows a spade according to the invention in partial cross-section.

The spade shown in the Figure comprises a wooden shaft 1 of generally conventional dimensions. A hole is provided along the longitudinal axis of the shaft 1. A fibreglass rod 4 is provided in this hole in the shaft 1 and this is conveniently secured in place using an epoxy resin.

A hilt 2 is present at one end of the shaft 1 and this is preferably formed of thermoplastics material, e.g. polypropylene. The hilt 2 is preferably secured to the shaft by having been directly moulded thereto. However, if desired the hilt may be alternatively glued to the shaft with a resin and/or held in place with a rivet or the like.

A tapered portion 5 is provided at the other end of the shaft 1 and this engages with a socket 6 in the blade 3 of the spade. The shaft may be secured to the socket with a rivet (not shown) and/or a conventional epoxy resin or the like.

In the embodiment shown in the Figure, the rod 4 extends between the hilt 2 and a part of the tapered portion 5. If desired, however, the rod may extend substantially the whole length of the shaft 1.

The handles of tools according to the invention have the appearance and feel of wooden handles while exhibiting improved strength and durability. They may also be produced at substantially reduced costs compared to solid fibreglass handles and are much lighter than these handles.

**Claims**

1. A wooden tool handle shaft having at least one longitudinal glass reinforcing plastics or fibreglass strengthening spine (4).

2. A shaft according to claim 1 wherein the spine (4) is in the form of a rod or bar inserted into longitudinal grooves or holes formed in the shaft.

3. A shaft according to claim 2 wherein a single shaft is provided and comprises a fibreglass rod which is inserted into a hole bored along the length of the shaft.

4. A shaft according to claim 3 additionally provided with a moulded thermoplastics hilt portion.

5. A shaft according to claim 4 wherein the fibreglass rod is inserted into an oversize hole in the shaft and the hilt is directly moulded on the shaft in such a way that thermoplastic material enters the space between the shaft and the rod thereby bonding the latter in place.

6. A shaft according to claim 5 wherein the hole is a blind hole.

7. A tool having a handle shaft according to any one of the preceding claims.

8. A tool according to claim 7 wherein the spine extends along the axis of the shaft between a hilt portion and at least part of the handle in a socket of the blade or forging of the tool.

FIGURE 1